(19) Europäisches Patentamt
European Patent Office
Office européen des brevets

(11) **EP 1 783 923 B1**

(12) **EUROPEAN PATENT SPECIFICATION**

(45) Date of publication and mention of the grant of the patent:
**04.05.2011 Bulletin 2011/18**

(51) Int Cl.:
*H04B 3/23* (2006.01)       *H04M 9/08* (2006.01)

(21) Application number: **05292337.2**

(22) Date of filing: **04.11.2005**

(54) **Double-talk detector for acoustic echo cancellation**

Gegensprechdetektor zur akustischen Echokompensation

Détecteur de double parole pour l'annulation d'écho acoustique

(84) Designated Contracting States:
**DE FR GB**

(43) Date of publication of application:
**09.05.2007 Bulletin 2007/19**

(73) Proprietors:
• **TEXAS INSTRUMENTS INC.**
  **Dallas, Texas 75265 (US)**
  Designated Contracting States:
  **DE GB**
• **TEXAS INSTRUMENTS FRANCE**
  **06271 Villeneuve Loubet Cedex,**
  **Nice (FR)**
  Designated Contracting States:
  **FR**

(72) Inventors:
• **Le Gall, Thierry**
  **06270 Villeneuve Loubet (FR)**
• **Le-Faucheur, Laurent**
  **Villa 'Cap Chancel'**
  **06640 Cap D'Antibes (FR)**

(74) Representative: **Holt, Michael**
  **Texas Instruments Limited**
  **European Patents Department**
  **800 Pavilion Drive**
  **Northampton NN4 7YL (GB)**

(56) References cited:
  **US-A- 6 028 929       US-A1- 2002 126 834**
  **US-B1- 6 449 361**

## Description

FIELD OF THE INVENTION

This invention relates in general to telecommunication circuits and, more particularly, to a double-talk detector for an acoustic echo canceller.

BACKGROUND OF THE INVENTION

In telephone communication, and particularly in mobile phones, the clarity of a conversation is of significant importance. There are many factors that contribute to unintended noise during a conversation; one primary factor is echoing.

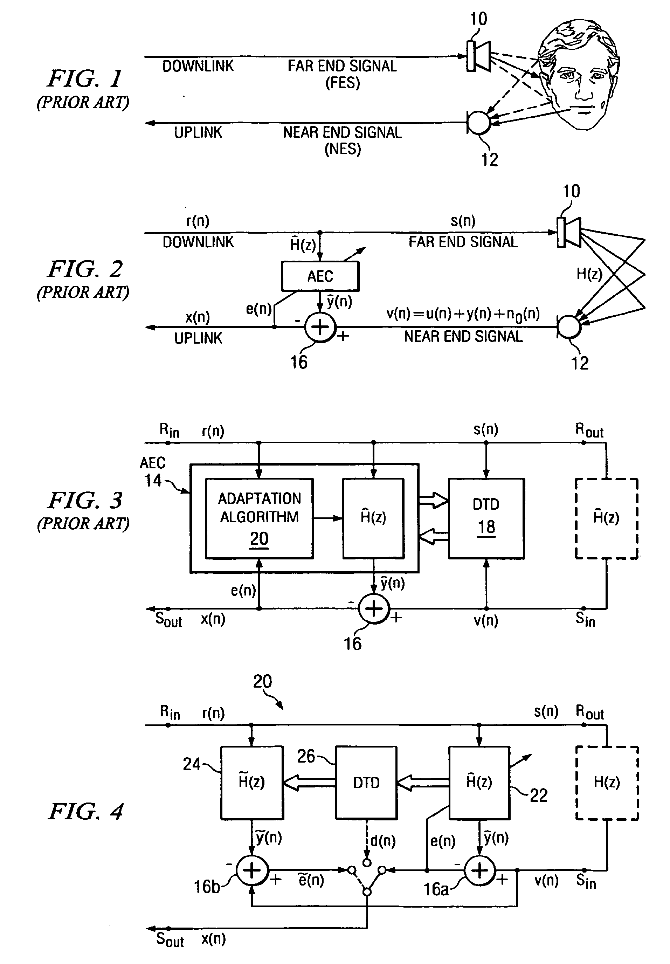

Figure 1 illustrates the cause of echoing. Whenever a loudspeaker sits near a microphone, such as in a telephone, some part of the downlink far end signal (FES) is reflected from the loudspeaker 10 to the microphone 12. The various reflections are referred to as the "echo path" or "channel". Sound from the echo channel is added to the near end signal (NES) in the uplink. This acoustic phenomenon is due to the multiple reflections of the loudspeaker output signal in the near end speaker environment.

The multiple reflections at the near end are transmitted back to the far end. Thus, the user at the far end hears his voice delayed and distorted by the communication channel - this is known as the echo phenomenon. The longer the channel delay and the more powerful the reflections, the more annoying the echo becomes in the far end, until it makes the natural conversation impossible.

Figure 2 illustrates a basic block diagram of a prior art scheme to improve the audio service quality by reducing the effect of acoustic echoing, a signal processing module, the Acoustic Echo Canceller (AEC) 14, is currently implemented in mobile phones.

In operation, the AEC 14 is an adaptive finite impulse response (AFIR) filter which mathematically mimics the echo channel. Thus, as shown in Figure 2, for an echo channel which can be described by function H(z), the resultant acoustic echo is y(n). The AEC 14 defines a mathematical model, $\hat{H}(z)$, of the echo channel. The AEC 14 receives the far end signal s(n) and generates a correction signal $\hat{y}(n)$. The output of the microphone, v(n), includes the echo channel, y(n), the users voice, u(n), and noise, $n_0(n)$. The output of the AEC 14 (the echo correction signal $\hat{y}(n)$) is mixed with the near end signal ( the output of microphone 12) at mixer 16. So long as $\hat{y}(n)$ is a close approximation to y(n), the AEC 14 will eliminate or greatly reduce the affects of the echo channel at the uplink. It should be noted that the various signals described herein are digital signals, and are processed in digital form. It also should be noted that while the specification shows $\hat{y}(n)$ being subtracted from the near end signal at mixer 16, the output of AEC 14 could be - $\hat{y}(n)$, and thus the output of AEC 14 could be added with the near end signal at mixer 16 with the same result.

The AEC 14 is an adaptive filter. The echo compensated signal e(n) is fed back to the AEC 14. The AEC 14 adjusts the weights (also referred to as "taps" or "coefficients") of the mathematical model $\hat{H}(z)$ responsive to the feedback to more closely conform to the actual acoustics of the echo channel. Methods of updating the weights are well known in the art, such as NLMS (Normalized Least Mean Square) adaptation or AP (Affine Projection) algorithm. Theoretically, the acoustic echo cancellation problem can be seen as the identification and the tracking of an unknown time varying system.

However, when the near end speaker and the far end speaker are talking at the same time, the adaptation of the AEC 14 is disturbed because the near end signal is uncorrelated with the far end signal. Consequently, the adaptive digital linear filter diverges far from the actual impulse response of the system echo channel H(z) and the AEC 14 no longer efficiently removes the echo in the uplink. Moreover, the near end speech signal is distorted by $\hat{y}(n)$ and the quality of the communication is highly degraded by the AEC 14.

Figure 3 illustrates a basic block diagram of a prior art system to prevent the AEC divergence during the double talk situations. This embodiment uses an additional component, the Double-Talk Detector (DTD) 18, in conjunction with the AEC 14. The purpose of the DTD 18 is to detect double-talk situations to deliver a command signal which freezes or slows down the AEC adaptation during the double-talk situation. Hence, based on the received far end signal, s(n), and the near end signal, v(n), the DTD determines whether a double talk situation is present. If so, the AEC 14 is notified. The AEC 14 includes an adaptation algorithm, 21, which under normal situations adapts the weights of filter 22, which implements $\hat{H}(z)$, based on the received far end signal, s(n), and the echo compensated signal e(n). Once a double-talk situation is detected further adaptations to the weight vector for filter 14 are halted or attenuated.

A system of the type shown in Figure 3 requires significant resources. The conventional solutions in the temporal domain are generally based on energy power estimates, such as described in U.S. Pat. No. 6, 608, 897 or cross-correlation criterion using the uplink, downlink and the AEC error signal (Double-Talk Detection Statistic), as described in U.S. Pat. Pub. 2002/126834. In the frequency domain, the spectral or the energy distance between the far end signal and the near end signal criterion is used in U.S. Pat. Pub. 2003/133,565 . In this publication, the double-talk detector signal is mainly used to freeze or to reduce the AEC adaptation during the double-talk situations.

Another solution in the time domain, shown in U.S. Patent 6,570,986 uses multiple filters and selects one or the other filter from which to calculate a squared norm from an entire filter weight vector, depending upon the current state.

United States Patent No. 6 028 929 describes an echo canceller circuit comprising a first digital filter having non-adaptive tap coefficient and a second digital filter having adaptive tap coefficients to simulate an echo response during a call. The adaptive tap coefficients of the second digital filter are updated over the duration of the call. A coefficient transfer controller is disposed in the echo canceller circuit to transfer the adaptive tap coefficients of the second digital filter to replace the tap coefficients of the first digital filter when a set of one or more transfer conditions is met. A non-linear echo path response detector is provided that is responsive to one or more parameters of the first and second digital filters to detect a non-linear echo path condition. United sTates Patent No. 6 449 3361 describes a method of controlling an echo canceller for providing an echo cancellation signal by subtracting an echo replica signal either from a transmit signal or a receive signal. The method includes the steps of a first step of performing a speech detection based on the echo cancellation signal provided by the echo canceller; a second step of detecting a double talk condition based on a result of the speech detection performed by the first step; and a third step of controlling a learning operation of the echo canceller based on a result of the double talk detection performed by the second step. United States Patent Application No.2002/126834 describes a process that generates matrix coefficients using zero-lag auto and cross-correlations from signals commonly found in echo cancellers. Double-talk and path changes are then detected using matrix operations such as determinants, eigendecompositions, or singular value decompositions (SVDs). In a preferred embodiment, the determinant of the correlation-based matrix is compared against predetermined threshold values.

The prior art methods are processing intensive and subject to errant detections as the phone is moved. Therefore a need has arisen for an efficient and accurate method and apparatus for echo cancellation in view of double talk situations.

BRIEF SUMMARY OF THE INVENTION

The present invention resides in a method of cancelling echo noise in a telephonic device and a telephonic device as set out in the appended claims. [0014]

This aspect of the invention allows the adaptive filter to remain adaptive and divergent during double talk periods for simplified determination of double talk situations using the weights of the adaptive IR filter.

In addition, the invention provides for determination of double talk situations using simplified mathematical and logical operations conducive to implementation by a DSP (digital signal processor). This discriminates between double talk situations and echo path variations, where divergence between the adaptive filter weights and an accurate echo path model occur due to changes in the echo path.

BRIEF DESCRIPTION OF THE DRAWINGS

For a more complete understanding of the present invention, and the advantages thereof, reference is now made to the following descriptions taken in conjunction with the accompanying drawings, in which:

Figure 1 illustrates causes of acoustic echoing in a communication system;

Figure 2 illustrates a basic block diagram of a prior art scheme to improve the audio service quality by reducing the effect of acoustic echoing;

Figure 3 illustrates a basic block diagram of a prior art system to prevent the AEC divergence during the double talk situations;

Figure 4 illustrates a block diagram of an embodiment of the present invention;

Figure 5 illustrates a three dimensional graph illustrating impulse responses for a NLMS filter during single talk and double talk situations;

Figure 6 illustrates a three dimensional graph showing impulse responses for an auxiliary filter used in the circuit of Figure 4;

Figure 7 illustrates a graph showing AEC output and DTD detection in the circuit of Figure 4; and

Figure 8 illustrates a telephone using the AEC system of Figure 4.

DETAILED DESCRIPTION

The present invention is best understood in relation to Figures 1-8 of the drawings, like numerals being used for like elements of the various drawings.

Figure 4 illustrates an embodiment of an echo cancellation circuit 20 which substantially improves echo cancellation over the prior art. As before, the echo channel is represented by H(z), and an AEC (AFIR) filter 22 receives the far end signal s(n) and generates an echo correction signal $\hat{y}(n)$ which is subtracted from v(n) at mixer 16a. The output of mixer 16a is the echo compensated signal, e(n). An auxiliary filter 24 receives the far end signal s(n) and generates an echo correction signal $\tilde{y}(n)$ which is subtracted from v(n) at mixer 16a to produce echo compensated signal $\tilde{e}(n)$. Auxiliary filter 24 periodically receives and stores the AEC adapted impulse response weights corresponding to $\hat{H}(z)$ through the double talk detector (DTD) 26. Auxiliary filter 24 is updated only during single-talk periods, as detected by DTD 26. DTD 26 uses the weight vector from filter 22 to detect double talk and single talk situations. Depending upon whether a single talk or a double talk situation is detected, DTD 26 selects either e(n) or $\tilde{e}(n)$ for output.

In operation, filter 22 operates adaptively, i.e., responsive to e(n), regardless of whether a single talk or double talk situation exist. DTD 26 continuously calculates a decision signal based solely on the weight components of the weight vector of filter 22 to determine whether the present state is of v(n) is single talk or double talk. During single talk periods, d(n) is set to select e(n) for output and, periodically, the weight vector of filter 22 is stored to filter 24. During double talk periods, d(n) is set to select $\tilde{e}(n)$ for output; during this time the weight vector for filter 24 is static; but the weight vector for filter 22 will continue to be adaptive to e(n), and, hence, diverging due to the double talk. Thus, during double talk situations, $\tilde{H}(z)$ is static at the point of the last transfer of a weight vector from $\hat{H}(z)$. When DTD 26 detects a transition from a double talk situation to a single talk situation, the weight vector from filter 24 is stored in filter 22 to return $\hat{H}(z)$ to a value which should be close to H(z).

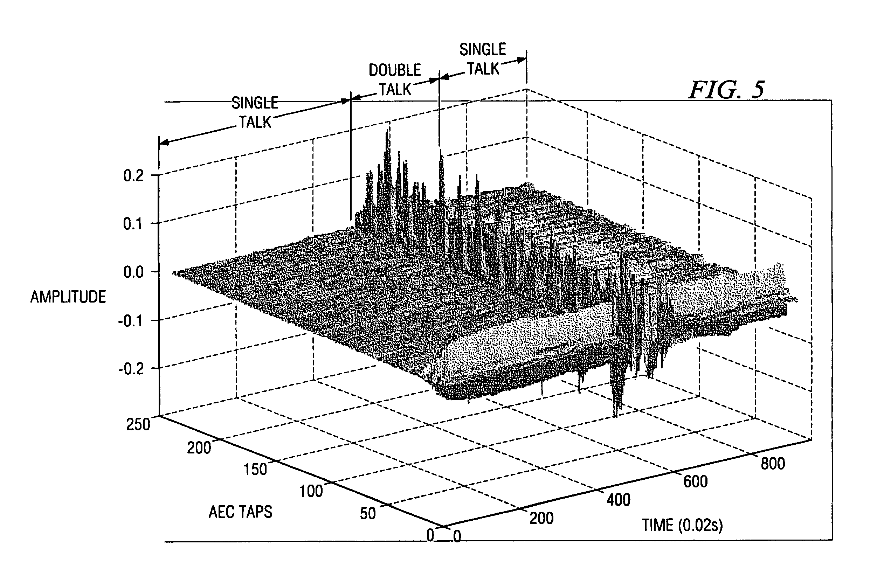

Figure 5 illustrates an impulse response for a NLMS AFIR filter 22 during a transition from a single talk state to a double talk state and back to single talk state. As can be seen, there is a severe disturbance induced by the double talk situation on the impulse response.

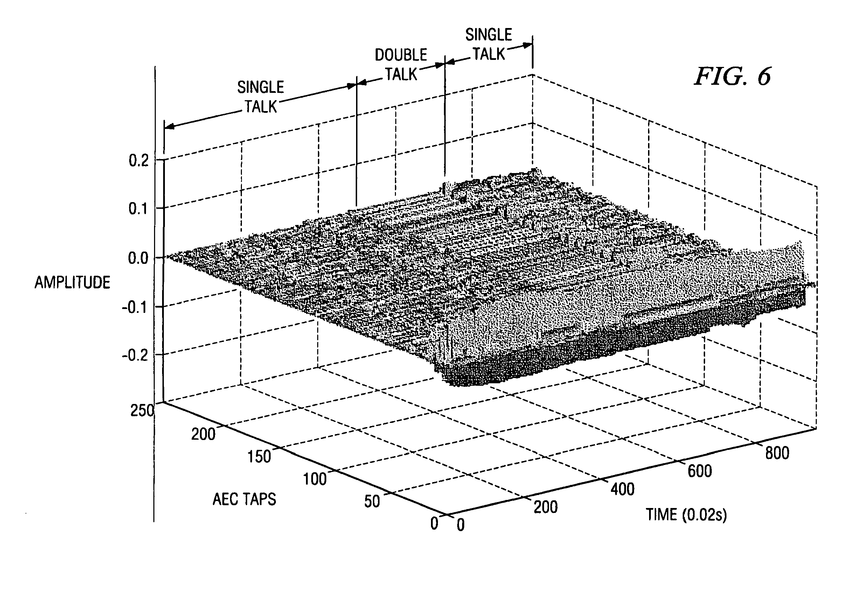

Figure 6 illustrates the impulse response for a static IF filter 24 during a transition from a single talk state to a double talk state and back to single talk state. As can be seen, when a double talk situation is detected, the static auxiliary filter 24 has a non-divergent impulse response for performing echo cancellation.

As discussed above, the DTD 26 uses the IR energy gradient from AEC filter 22 to detect double talk situations. In the preferred embodiment, the DTD 26 uses only the second-half IR weights (i.e., the higher order weights) to perform the detection function. An energy gradient is approximated using a differential method and its absolute value is subjected to a low-pass iterative IIR (infinite impulse response) filter. The double talk decision is then made through a comparison between the decision signal and a predefined threshold. An embodiment for performing the detection is given below.

In the following equations, $\hat{h}(n)$ is the AEC IR weight vector corresponding to the transfer function H(z), computed at the sampling time $t_n = $ to + $nT_e$, where the initial time is to and the sampling period is $T_e$.

$$\hat{h}(n) = \left[\hat{h}_0, \ldots, \hat{h}_{N-1}\right]^T \in \Re^{N \times 1} \, ,$$

where N is the AEC IR length and $R^{N \times 1}$ denotes the real values in a vector of length N.

The AEC second-half IR energy at iteration n is computed as:

$$\varepsilon_{\hat{h}}(n) = \sum_{i=\frac{N}{2}}^{N-1} \hat{h}_i^2(n) \, .$$

The AEC IR gradient energy at iteration n is approximated using the differential energy with iteration n-1:

$$\gamma_{\hat{h}}(n) = \left|\varepsilon_{\hat{h}}(n) - \varepsilon_{\hat{h}}(n-1)\right| \, .$$

The approximate gradient $\gamma_{\hat{h}}$ is low-pass filtered to obtain the double-talk detector decision signal $\delta$ :

$$\delta(n) = \lambda\delta(n-1) + (1-\lambda)\gamma_{\hat{h}}(n) \, ,$$

with λ being a constant forgetting factor, generally between the values of 0.9 and 0.99 that allows the low pass filtering to be implemented in an iterative manner.

The double talk decision, d(n) at iteration n is decided using a comparison between the signal values $\beta\delta(n)$, where β is a gain factor, with a predefined decision threshold θ according to:

$$\begin{cases} d(n) \neq 0, \text{ if } \beta\delta(n) \geq \theta \Rightarrow double-talk \; situation \\ d(n) = 0, \text{ if } \beta\delta(n) < \theta \Rightarrow single-talk \; situation \end{cases} \, .$$

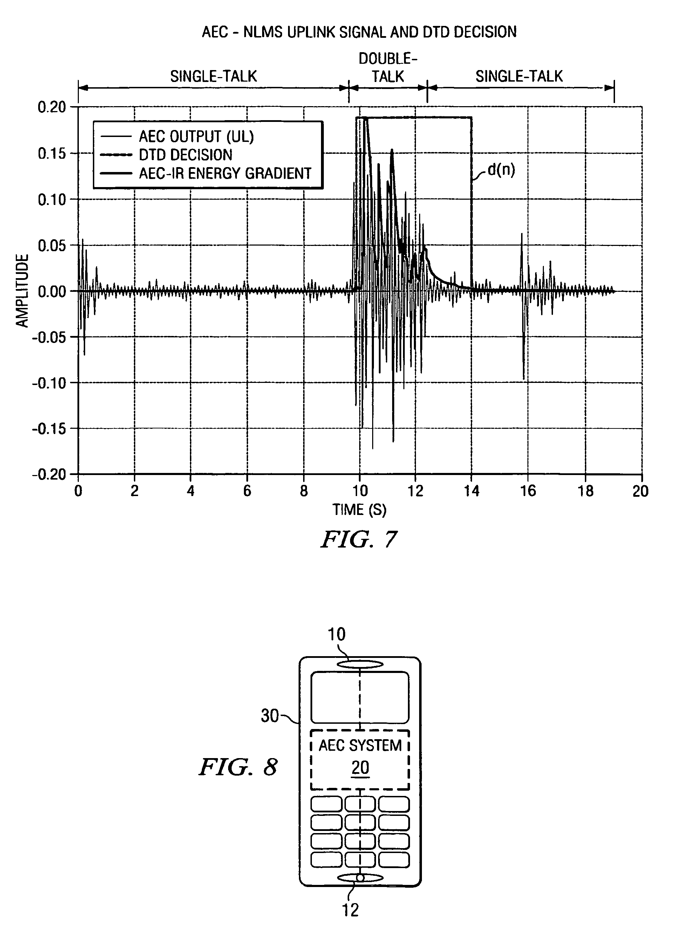

An example of the AEC output, AEC IR energy gradient and double talk decision are shown in Figure 7.

The uplink signal, x(n), is selected from either the AEC IR filter 22 or the static auxiliary filter 24 dependent upon d(n):

$$\begin{cases} x(n) = \hat{e}(n) \, if \, d(n) = 1 \\ x(n) = e(n) \, if \, d(n) = 0 \end{cases} \, .$$

Because the DTD 26 approximates the energy gradient along the time dimension of the impulse response energy along the taps dimension, rather than the full gradient energy, the computations needed to compute the double talk decision has a low computation complexity, using only multiply, accumulate and logical operations. The embodiment described above does not need the near end signal or far end signal to detect double talk situations. Further, the complexity of computation is reduced by using only the second half of the AEC IR weight vector. More complex operations, such as divisions and matrix inversions, are not necessary. This lends the computation to a DSP (digital signal processor) fixed point implementation. Further, the computation can be implemented in both sample-to-sample and block processing.

While described in connection with an NLMS adaptive IR filter, the embodiment could be used with LMS (Least Mean Square), AP (Affine Projection), or other filter in the temporal domain using an IR computation.

Figure 8 illustrates a telephonic device, such as a mobile phone or smart phone, incorporating the AEC system 20 of Figure 4.

The various components of the AEC system 20, including AEC filter 22, auxiliary filter 24, DTD 26 and mixers 16a and 16b can be implemented as multiple tasks on a single DSP.

In tests using a recorded database with artificial and real speech signals and propagation in real reverberant environments, the embodiment has shown to be noise resistant within a 5 to 20db signal-to-noise ratio in both the uplink and the downlink. Also, this embodiment has the ability to discriminate between double-talk situations and echo path variations (EPVs). In an EPV, the echo path has changed, because the phone has moved, and thus $\hat{H}(z)$ must be modified to accommodate the new H(z). However, if an EPV is mistakenly detected as a double talk situation, the AEC filter 14 will be frozen (prior art) or the static auxiliary filter 24 is used for echo cancellation as described in connection with Figure 4. In either case, mistaking an EPV for a double talk situation will delay cancellation of the echo adaptively.

Using the detection method described above, where only the second half of the AEC impulse response along the time dimension is used, EPVs are not generally mistaken for double talk situations, since an EPV generally affects the first half of the AEC impulse response along the time dimension, i.e.,

$$\varepsilon_{\hat{h}}(n) = \sum_{i=0}^{\frac{N}{2}-1} \hat{h}_i^2(n) \, ,$$

while a double talk situation affects all the impulse response along the taps dimension (as shown in Figure 5). Accordingly, the double talk detector described above is insensitive to EPVs, resulting in fewer false detections. It should be noted that while the upper half of the higher order weights are used to detect double talk situations in the preferred embodiment, it is expected that a significantly smaller number of the higher order weights could be used, such as the top quarter or eighth of the weights, with success. In general, using a smaller portion of the higher order weights will increase the insensitivity to EPVs, but may lessen the ability to recognize a double talk situation. Of course, the number of calculations decreases with the number of weights used. It would also be possible to have a programmable number of weights used in the calculation - the user or manufacturer could adjust the number of weights used as appropriate.

Although the Detailed Description of the invention has been directed to certain example embodiments, various modifications of these embodiments, as well as alternative embodiments, will be suggested to those skilled in the art. The invention encompasses any modifications or alternative embodiments that fall within the scope of the claimed invention.

**Claims**

1.  A method of cancelling echo noise in a telephonic device (10) wherein a far end signal s(n) received by the telephonic device (10) is acoustically coupled to a near end signal v(n) transmitted by the device, the method comprising the steps of:

    generating a first echo cancellation signal $\hat{y}(n)$ from the far end signal s(n) in an adaptive impulse response filter (22) wherein the adaptive impulse response filter (22) has weights that are modified in response to an echo-compensated signal e(n) generated by mixing the near end signal v(n) with the first echo cancellation signal $\hat{y}(n)$;
    generating a second echo cancellation signal $\tilde{y}(n)$ from the far end signal s(n) in a non-adaptive impulse response filter (24) wherein the non-adaptive impulse response filter (24) is adapted to periodically receive modified weights from the adaptive impulse response filter (22);
    detecting either a single talk state or a double talk state in the near end signal v(n); and
    generating an uplink signal x(n) comprising the near end signal mixed v(n) with either the first echo cancellation signal $\hat{y}(n)$ or the second cancellation signal $\tilde{y}(n)$ responsive to the detected state;
    **characterized in that** the non-adaptive impulse response filter (24) receives modified weights from the adaptive impulse response filter (22) during single talk states only and wherein on detection of a transition from double talk state to single talk state, the modified weight vector from the non-adaptive impulse response filter (24) is stored in the adaptive impulse response filter (22).

2.  The method of claim 1, wherein said detecting step comprises the step of detecting either a single talk state or a double talk state responsive to some or all of the weights the adaptive filter (22).

3.  The method of claim 2, wherein the step of detecting either a single talk state or a double talk state comprises calculating an approximation of an impulse response energy gradient using an upper portion of the weights.

4.  The method of claim 3, wherein said upper portion comprises one half or less of the weights.

5.  A telephonic device comprising:

    a loudspeaker for receiving a far end signal and generating an acoustic output signal;
    a microphone for receiving an acoustic input, wherein said microphone will receive the acoustic output signal via an echo path;
    circuitry for generating a first echo cancellation signal $\hat{y}(n)$ from the far end signal s(n) in an adaptive impulse response filter (22) wherein the adaptive impulse response filter (22) has weights that are modified in response to an echo-compensated signal e(n) generated by mixing the near end signal v(n) with the first echo cancellation signal $\hat{y}(n)$;
    circuitry for generating a second echo cancellation signal $\tilde{y}(n)$ from the far end signal s(n) in a non-adaptive impulse response filter (24) wherein the non-adaptive impulse response filter (24) is adapted to periodically receive modified weights from the adaptive impulse response filter (22) ;
    circuitry for detecting either a single talk state or a double talk state in the near end signal v(n); and
    circuitry for generating an uplink signal x(n) comprising the near end signal mixed v(n) with either the first echo cancellation signal $\hat{y}(n)$ or the second cancellation signal $\tilde{y}(n)$ responsive to the detected state;
    **characterised in that** the non-adaptive impulse response filter (24) receives modified weights from the adaptive impulse response filter (22) during single talk states only and wherein on detection of a transition from double talk state to single talk state, the modified weight vector from the non-adaptive impulse response filter (24) is stored in the adaptive impulse response filter (22).

6. The telephonic device of claim 5, wherein the detecting circuitry comprises the circuitry for detecting either a single talk state or a double talk state responsive to a portion of the weights of the adaptive filter (22).

7. The method of claim 6, wherein the detecting circuitry comprises circuitry for calculating an approximation of an impulse response energy gradient using an upper portion of the weights.

8. The method of claim 7, wherein said upper portion comprises one half or less of the weights.

**Patentansprüche**

1. Verfahren zur Unterdrückung von Echogeräuschen in einer Telefon-Vorrichtung (10), wobei ein von einem entfernten Ende kommendes und von der Telefon-Vorrichtung (10) empfangenes Signal s(n) akustisch in ein von einem nahen Ende kommendes und von der Vorrichtung übertragenes Signal v(n) eingekoppelt wird, wobei das Verfahren die folgenden Schritte umfasst:

   Erzeugen eines ersten Echounterdrückungssignals $\hat{y}(n)$ aus dem von dem entfernten Ende kommenden Signal s(n) in einem adaptiven Impuls-Antwortfilter (22), wobei der adaptive Impuls-Antwortfilter (22) Gewichtungen aufweist, die in Reaktion auf ein Echo-kompensiertes Signal e(n) modifiziert werden, und wobei das Echo-kompensierte Signal e(n) durch Mischen des von dem nahen Ende kommenden Signals v(n) mit dem ersten Echounterdrückungssignal $\hat{y}(n)$ erzeugt wird;
   Erzeugen eines zweiten Echounterdrückungssignals $\tilde{y}(n)$ aus dem von dem entfernten Ende kommenden Signal s(n) in einem nicht-adaptiven Impuls-Antwortfilter (24), wobei der nicht-adaptive Impuls-Antwortfilter (24) dazu ausgelegt ist, modifizierte Gewichtungen von dem adaptiven Impuls-Antwortfilter (22) periodisch zu empfangen;
   Detektieren entweder eines Einzelsprecherzustandes oder eines Doppelsprecherzustandes in dem von dem nahen Ende kommenden Signal v(n); und
   Erzeugen eines Uplink-Signals x(n), umfassend: das von dem nahe Ende kommende Signal v(n), welches entweder mit dem ersten Echounterdrückungssignal $\hat{y}(n)$ oder mit dem zweiten Unterdrückungssignal $\tilde{y}(n)$ in Reaktion auf den detektierten Zustand gemischt wird;
   **dadurch gekennzeichnet, dass**
   der nicht-adaptive Impuls-Antwortfilter (24) modifizierte Gewichtungen von dem adaptiven Impuls-Antwortfilter (22) lediglich während eines Einzelsprecherzustandes empfängt, und wobei bei Detektion eines Übergangs von dem Doppelsprecherzustand in den Einzelsprecherzustand der modifizierte Gewichtungen-Vektor des nicht-adaptiven Impuls-Antwortfilters (24) in dem adaptiven Impuls-Antwortfilter (22) gespeichert wird.

2. Verfahren nach Anspruch 1, wobei besagter Detektionsschritt den folgenden Schritt umfasst: Detektieren entweder eines Einzelsprecherzustandes oder eines Doppelsprecherzustandes in Reaktion auf einige oder alle der Gewichtungen des adaptiven Filters (22).

3. Verfahren nach Anspruch 2, wobei der Schritt des Detektierens entweder eines Einzelsprecherzustandes oder eines Doppelsprecherzustandes umfasst: Berechnen einer Näherung eines Impuls-Antwort-Energie-Gradienten unter Verwendung eines oberen Teils der Gewichtungen.

4. Verfahren nach Anspruch 3, wobei besagter oberer Teil die Hälfte oder weniger der Gewichtungen umfasst.

5. Telefon-Vorrichtung, umfassend:

   einen Lautsprecher zum Empfang eines von einem entfernten Ende kommenden Signals und zur Erzeugung eines akustischen Ausgangssignals;
   ein Mikrofon zum Empfang eines akustischen Eingangssignals, wobei besagtes Mikrofon das akustische Ausgangssignal über einen Echopfad empfangen kann;
   eine Schaltung zur Erzeugung eines ersten Echounterdrückungssignals $\hat{y}(n)$ aus dem von dem entfernten Ende kommenden Signal s(n) in einem adaptiven Impuls-Antwortfilter (22), wobei der adaptive Impuls-Antwortfilter (22) Gewichtungen aufweist, welche in Reaktion auf ein Echo-kompensiertes Signal e(n) modifiziert werden, wobei das Echo-kompensierte Signal e(n) erzeugt wird, indem das von dem nahen Ende kommende Signal v(n) mit dem ersten Echounterdrückungssignal $\hat{y}(n)$ gemischt wird;
   eine Schaltung zur Erzeugung eines zweiten Echounterdrückungssignals $\tilde{y}(n)$ aus einem von einem entfernten Ende kommenden Signal s(n) in einem nicht-adaptiven Impuls-Antwortfilter (24), der dazu ausgelegt ist modifizierte Gewichtungen von dem adaptiven Impuls-Antwortfilter (22) periodisch zu empfangen;

eine Schaltung zur Detektion entweder eines Einzelsprecherzustandes oder eines Doppelsprecherzustandes in dem von dem nahen Ende kommenden Signal v(n); und

eine Schaltung zur Erzeugung eines Uplink-Signals x(n), welches das von dem nahen Ende kommende Signal v(n), welches in Abhängigkeit von dem detektierten Zustand mit entweder dem ersten Echounterdrückungssignal $\hat{y}$(n) oder dem zweiten Unterdrückungssignal $\tilde{y}$(n) gemischt wird, umfasst;

**dadurch gekennzeichnet, dass**

der nicht-adaptive Impuls-Antwortfilter (24) modifizierte Gewichtungen von dem adaptiven Impuls-Antwortfilter (22) lediglich während eines Einzelsprecherzustandes empfängt, und wobei bei Detektion eines Übergangs von einem Doppelsprecherzustand in einen Einzelsprecherzustand der modifizierte Gewichtungen-Vektor des nicht-adaptiven Impuls-Antwortfilters (24) in dem adaptiven Impuls-Antwortfilter (22) gespeichert wird.

6. Telefon-Vorrichtung nach Anspruch 5, wobei die Detektionsschaltung umfasst: die Schaltung zur Detektion entweder eines Einzelsprecherzustandes oder eines Doppelsprecherzustandes, die auf einen Teil der Gewichtungen des adaptiven Filters (22) anspricht.

7. Verfahren nach Anspruch 6, wobei die Detektionsschaltung eine Schaltung zur Berechnung einer Näherung eines Impuls-Antwort-Energie-Gradienten umfasst, wobei zur Berechnung ein oberer Teil der Gewichtungen verwendet wird.

8. Verfahren nach Anspruch 7, wobei besagter oberer Bereich eine Hälfte oder weniger der Gewichtungen umfasst.


**Revendications**

1. Procédé de suppression d'un bruit d'écho dans un dispositif téléphonique (10), dans lequel un signal d'extrémité lointaine s(n) reçu par le dispositif téléphonique (10) est couplé de manière acoustique à un signal d'extrémité proche v(n) transmis par le dispositif, le procédé comprenant les étapes consistant à :

générer un premier signal de suppression d'écho $\hat{y}$(*n*) à partir du signal d'extrémité lointaine s(n) dans un filtre adaptatif à réponse impulsionnelle (22), dans lequel le filtre adaptatif à réponse impulsionnelle (22) présente des poids qui sont modifiés en réponse à un signal compensé en écho e(n) généré en mélangeant le signal d'extrémité proche v(n) avec le premier signal de suppression d'écho $\hat{y}$(*n*) ;

générer un second signal de suppression d'écho $\tilde{y}$(*n*) à partir du signal d'extrémité lointaine s(n) dans un filtre non adaptif à réponse impulsionnelle (24), dans lequel le filtre non adaptif à réponse impulsionnelle (24) est adapté de façon à recevoir de manière périodique les poids modifiés en provenance du filtre adaptatif à réponse impulsionnelle (22) ;

détecter un état de parole unique ou un état de parole double dans le signal d'extrémité proche v(n) ; et

générer un signal de liaison montante x(n) qui comprend le signal d'extrémité proche v(n) mélangé avec le premier signal de suppression d'écho $\hat{y}$(*n*) ou avec le second signal de suppression d'écho $\tilde{y}$(*n*) en réponse à l'état détecté ;

**caractérisé en ce que** le filtre non adaptif à réponse impulsionnelle (24) reçoit des poids modifiés en provenance du filtre adaptatif à réponse impulsionnelle (22) au cours des états de parole unique seulement, et dans lequel lors d'une détection d'une transition à partir de l'état de parole double vers l'état de parole unique, le vecteur de poids modifié en provenance du filtre non adaptif à réponse impulsionnelle (24) est stocké dans le filtre adaptatif à réponse impulsionnelle (22).

2. Procédé selon la revendication 1, dans lequel ladite étape de détection comprend l'étape consistant à détecter un état de parole unique ou un état de parole double en réponse à certains des poids du filtre adaptatif (22), voire à tous.

3. Procédé selon la revendication 2, dans lequel l'étape consistant à détecter un état de parole unique ou un état de parole double comprend une étape consistant à calculer une approximation d'un gradient d'énergie de réponse impulsionnelle à l'aide de la partie supérieure des poids.

4. Procédé selon la revendication 3, dans lequel ladite partie supérieure comprend une moitié des poids, voire moins.

5. Dispositif téléphonique comprenant :

un haut-parleur destiné à recevoir un signal d'extrémité lointaine et à générer un signal de sortie acoustique ;

un microphone destiné à recevoir une entrée acoustique, dans lequel ledit microphone recevra le signal de sortie acoustique par l'intermédiaire d'un chemin d'écho ;

des circuits destinés à générer un premier signal de suppression d'écho $\hat{y}(n)$ à partir du signal d'extrémité lointaine s(n) dans un filtre adaptatif à réponse impulsionnelle (22), dans lequel le filtre adaptatif à réponse impulsionnelle (22) présente des poids qui sont modifiés en réponse à un signal compensé en écho e(n) généré en mélangeant le signal d'extrémité proche v(n) et le premier signal de suppression d'écho $\hat{y}(n)$ ;

des circuits destinés à générer un second signal de suppression d'écho $\tilde{y}(n)$ à partir du signal d'extrémité lointaine s(n) dans un filtre non adaptif à réponse impulsionnelle (24), dans lequel le filtre non adaptif à réponse impulsionnelle (24) est adapté de façon à recevoir de manière périodique les poids modifiés en provenance du filtre adaptatif à réponse impulsionnelle (22) ;

des circuits destinés à détecter un état de parole unique ou un état de parole double dans le signal d'extrémité proche v(n) ; et

des circuits destinés à générer un signal de liaison montante x(n) qui comprend le signal d'extrémité proche v(n) mélangé avec le premier signal de suppression d'écho $\hat{y}(n)$ ou avec le second signal de suppression d'écho $\tilde{y}(n)$ en réponse à l'état détecté ;

**caractérisé en ce que** le filtre non adaptif à réponse impulsionnelle (24) reçoit des poids modifiés en provenance du filtre adaptatif à réponse impulsionnelle (22) au cours des états de parole unique seulement, et dans lequel lors d'une détection d'une transition à partir de l'état de parole double vers l'état de parole unique, le vecteur de poids modifié en provenance du filtre non adaptif à réponse impulsionnelle (24) est stocké dans le filtre adaptatif à réponse impulsionnelle (22).

6. Dispositif téléphonique selon la revendication 5, dans lequel les circuits de détection comprennent les circuits destinés à détecter un état de parole unique ou un état de parole double en réponse à une partie des poids du filtre adaptatif (22).

7. Procédé selon la revendication 6, dans lequel les circuits de détection comprennent des circuits destinés à calculer une approximation d'un gradient d'énergie de réponse impulsionnelle à l'aide de la partie supérieure des poids.

8. Procédé selon la revendication 7, dans lequel ladite partie supérieure comprend une moitié des poids, voire moins.

FIG. 1
(PRIOR ART)

DOWNLINK    FAR END SIGNAL
            (FES)

UPLINK      NEAR END SIGNAL
            (NES)

10

12

FIG. 2
(PRIOR ART)

$r(n)$
DOWNLINK

$\hat{H}(z)$

AEC

$e(n)$

$\hat{y}(n)$

$x(n)$
UPLINK

16

$s(n)$
FAR END SIGNAL

$H(z)$

$v(n) = u(n) + y(n) + n_0(n)$
NEAR END SIGNAL

10

12

FIG. 3
(PRIOR ART)

$R_{in}$   $r(n)$

AEC
14

ADAPTATION
ALGORITHM
20

$\hat{H}(z)$

$e(n)$

$S_{out}$   $x(n)$

16

$s(n)$

DTD
18

$\hat{y}(n)$

$v(n)$

$R_{out}$

$\hat{H}(z)$

$S_{in}$

FIG. 4

20

$R_{in}$   $r(n)$

24

$\tilde{H}(z)$

$\tilde{y}(n)$

16b

$\tilde{e}(n)$

26

DTD

$d(n)$

$e(n)$

$s(n)$   $R_{out}$

$\hat{H}(z)$

22

$\hat{y}(n)$

16a

$v(n)$   $S_{in}$

$H(z)$

$S_{out}$   $x(n)$

FIG. 5

*FIG. 6*

SINGLE TALK

DOUBLE TALK

SINGLE TALK

AMPLITUDE

0.2  0.1  0.0  -0.1  -0.2

250  200  150  100  50  0

AEC TAPS

0  200  400  600  800

TIME (0.02s)

FIG. 7

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6608897 B
- US 2002126834 A
- US 2003133565 A
- US 6570986 B
- US 6028929 A
- US 64493361 B